# EUROPÄISCHE PATENTSCHRIFT

(11) **EP 2 302 082 B1**
(45) Veröffentlichungstag und Bekanntmachung des Hinweises auf die Patenterteilung: **17.04.2013**
(21) Anmeldenummer: 09011333.3
(22) Anmeldetag: 03.09.2009
(51) Int. Cl.: C22B 9/05, C22B 15/06, F27D 7/00

(54) **Verfahren zum Betreiben eines Konverters und Vorrichtung zur Durchführung des Verfahrens**
Method for operating of a converter and apparatus for carrying out the method
Procédé destiné au fonctionnement d'un convertisseur et dispositif d'exécution du procédé

(43) Veröffentlichungstag der Anmeldung: 30.03.2011
(73) Patentinhaber: Linde AG, 80331 München (DE)
(72) Erfinder: Adendorff, Martin, 85386 Eching (DE)
(74) Vertreter: Gellner, Bernd

(56) Entgegenhaltungen:
- EP-A- 0 053 848
- DE-A1- 4 014 835
- DE-A1- 19 638 148
- US-A- 5 435 833

## Beschreibung

Die vorliegende Erfindung betrifft ein Verfahren zum Betreiben eines Konverters, insbesondere eines Peirce-Smith-Konverters oder eines Konverters mit dergleichen Aufbau oder Wirkungsweise, und eine Vorrichtung, etwa eine Anlage, zur Durchführung des Verfahrens.

### Bisheriger Stand der Technik

Peirce-Smith-Konverter (PSC) sind horizontale Konverter, die bei der hüttentechnischen Herstellung von Kupfer eingesetzt werden. Ausgangsmaterial ist der sogenannte Kupferstein, der aus einem kupferhaltigen Erz mittels vorhergehender Verarbeitungsschritte gewonnen wird und etwa 40% Kupfer enthält. Der Kupferstein enthält unter anderem Eisen- und Kupfersulfid. In dem Peirce-Smith-Konverter wird in einem als "Verblasen" bezeichneten, zweistufigen Konvertierungsprozess durch Einblasen von Luft in den glutflüssigen Kupferstein der Schwefel zu Schwefeldioxid oxidiert und in dem Abgas abgeführt. Im ersten Schritt des Schlackeblasens wird Eisen zu Schlacke gebunden und entfernt, im zweiten Schritt des Garblasens wird das Rohkupfer mit über 98% Kupfer und Resten von unedlen und edlen Metallen erzeugt und abgegossen.

Der Pierce-Smith-Prozess weist Ähnlichkeiten zum Bessemer-Verfahren bei der Stahlherstellung auf, von welchem er sich historisch über mehrere Zwischenschritte auch ableitet. Im Unterschied zum Bessemer-Verfahren wird die Luft aber nicht von unten, sondern von der Seite eingeblasen, und die Form des Peirce-Smith-Konverters ist horizontal gestreckt. Das Grundprinzip des Pierce-Smith-Konverters hat einige Weiterentwicklungen erfahren wie etwa zum Hoboken-Konverter.

Der Konverter weist eine Öffnung an seiner Oberseite auf, die dem Befüllen mit Kupferstein und dem Abgießen des Rohkupfers dient und die während des Betriebes nie vollständig geschlossen wird. Daher wird etwa die gleiche Menge an Luft angesaugt, wie Abgas produziert wird. Eine weitere Optimierung der Abdeckung mit dem Ziel, die Menge der eintretenden Umgebungsluft zu begrenzen, würde erhebliche Änderungen am Prozessdesign erforderlich machen.

Über spezielle Blasdüsen (Tuyeres) wird dem Konverter an mehreren Stellen Luft zugeführt. Die Luft erzeugt Blasen, die zu Spritzern auf der Oberfläche der Schmelze und auf der Wandung, insbesondere in der Umgebung der Öffnung, führen. Hier lagert sich auch Schlacke und Staub ab.

Die Luft dient einerseits zur Sauerstoffzufuhr und andererseits zur Kühlung. Bei den herkömmlichen Verfahren mit Luft ist zur Kühlung des PSC so viel Luft notwendig, dass Sauerstoff immer im Überschuss vorliegt.

Das Abgas des Konverters enthält Schwefeldioxid. Bei herkömmlichen Konvertern ist eine Schwefelsäureanlage nachgeschaltet, um aus dem Schwefeldioxid Schwefelsäure herzustellen. Hierdurch soll die Schwefeldioxid Emmissionen minimiert (kontrolliert)werden. Die Schwelfelsäure-Anlagen sind große Prozessanlagen. Der Markt für Schwefelsäure ist begrenzt. Der Hauptzweck dieser Schwefelsäureanlagen ist somit, das Schwefeldioxid kontrolliert zu entfernen. Im Artikel "Peirce-Smith Converting - another 100 years?", Thomas Price et al.; International Peirce-Smith Converting Centennial, TMS, 2009 ist auf Seite 193 ein Verfahren beschrieben, bei dem Schwefeldioxid im Kreislauf in einer Peirce-Smith-Konverteranlage betrieben wird.

Die im Konverter ablaufenden Reaktionen sind exotherm. Daher ist die thermische Belastung an der Austrittsöffnung der Blasdüsen hoch, und die thermische Erosion der feuerfesten Auskleidung des Konverters ist an dieser Stelle besonders hoch im Vergleich zu anderen Bereichen. Dies kann eine frühe Erneuerung der Auskleidung erforderlich machen. In dem Artikel "Operation of the Air Liquid Shrouded Injection (ALSI ™) Technotogy in a Hoboken Siphon Converter", Romeo U. Pagador et al.; International Peirce-Smith Converting Centennial, TMS, 2009, Seiten 367 ff., wird die Anwendung einer Manteldüse beschrieben, bei welcher mit Sauerstoff angereicherte Luft in einer Mantelströmung aus Stickstoff in den Konverter eingeblasen wird.

Im normalen Betrieb setzen sich die Blasdüsen zu. Bisher werden die Blasdüsen freigeschlagen. Dies erfolgt manuell. Hierzu wird ein Kugelhahn geöffnet, durch den manuell ein Stößel (=Puncher) gestossen wird, um die sich an der Düse ansammelnde Kruste zu entfernen.

In der DE 40 14 835 A1 ist ein Verfahren zur Oxidationsbehandlung eines flüssigen Bades beschrieben. Bei diesem Verfahren ist vorgesehen, dem flüssigen Bad ein gasförmiges Oxidationsmittel zuzuführen. Dieses Oxidationsmittel ist z.B. Luft oder mit Sauerstoff angereicherte Luft oder reiner Sauerstoff. Während des Zuführens des Oxidationsmittels wird gleichzeitig Kohlendioxidgas zugeführt, wobei durch die Zuführung von Kohlendioxid eine Wärmeregulierung im Bad möglich ist. Der Gesamtgehalt an Sauerstoff und Kohlendioxidgas im Bezug auf das eingeführte gasförmige Gemisch beträgt wenigstens 20%. Der Zusatz von Kohlendioxidgas zu dem gasförmigen Gemisch ermöglicht es eine übermäßige Temperatursteigerung zu begrenzen. Hierdurch können Beschädigungen eines Injektors vermieden werden. Insbesondere dadurch, dass die endotherme Reaktion des Kohlendioxids an einer ersten Stelle nahe dem Austritt des Injektors erfolgt, während die damit verbundene exotherme Reaktion an einer zweiten Stelle in einiger Entfernung von diesem Austritt erfolgt.

Aus der DE 196 38 148 A1 geht eine Sauerstofflanze und ein Verfahren zum Verblasen von flüssigem Metall hervor. Beim Verblasen eines flüssigen Metalls in einem Konverter ist vorgesehen einen sauerstoffhaltiges Gas und ein Inertgas in den Konverter einzuleiten. Dieses Gas soll mindestens 60 Vol.-% Sauerstoff enthalten. Hierdurch wird die Verblasezeit wesentlich verkürzt. Die Sauerstofflanzen bestehen aus zwei konzentrischen Rohren, welche eine innere Zuleitung für ein sauerstoffhaltiges Gas und eine äußere Zuleitung für ein Inertgas bilden. Als Konverter ist ein liegender Trommelkonverter beschrieben. Gemäß diesem Verfahren ist vorgesehen, durch das Einblasen eines Sauerstoffs enthaltenen Gases die Verblasezeit zu verkürzen und die Kühlwirkung zu verbessern. Das Einblasen erfolgt mittels der Lanzen. Durch die zentrale Öffnung der Lanze wird Sauerstoff zugeführt und in dem die zentrale Bohrung umgebenden Ringspalt wird ein Inertgas wie z.B. CO₂ zugeführt.

### Kurzfassung der Erfindung

Die Aufgabe der vorliegenden Erfindung besteht darin, die Nachteile des Stands der Technik zu vermeiden. Insbesondere besteht eine Aufgabe der Erfindung darin, ein Verfahren zum Betreiben eines Peirce-Smith-Konverters zu schaffen, das effizienter ist und einfacher gesteuert werden kann.

Wenigstens ein Teil der vorstehend genannten Aufgaben wird durch die Merkmale der unabhängigen Ansprüche gelöst. Bevorzugte Ausführungsformen und Weiterentwicklungen der Erfindung, die spezielle Teilaufgaben lösen, bilden den Gegenstand der Unteransprüche.

Nach einem Gesichtspunkt der vorliegenden Erfindung weist ein Verfahren zum Betreiben eines Konverters, vorzugsweise eines Peirce-Smith-Konverters oder dergleichen, bei der Gewinnung eines Metalls, vorzugsweise Kupfer, Eisen, Blei und/oder Zink, die Schritte auf:
- Beladen des Konverters mit einem das Metall enthaltenden Ausgangsmaterial, wobei das Metall in dem Ausgangsmaterial wenigstens teilweise an wenigstens einen Verbindungsstoff, insbesondere Schwefel, chemisch gebunden ist;
- Halten einer Temperatur innerhalb des Konverterinnenraums, die oberhalb der Schmelztemperatur des Ausgangsmaterials liegt; und
- Zuführen eines Sauerstoff enthaltenden Prozessgases über in der Wandung des Konverters angeordnete Blasdüsen in den Konverterinnenraum,
wobei das über die Blasdüsen zugeführte Gas Kohlendioxid, vorzugsweise sehr kaltes, technisch reines Kohlendioxid, sowie Sauerstoffgas und/oder Luft aufweist.

CO₂ hat eine bedeutend größere Wärmekapazität als Luft. Daher ist die Kühlfunktion von CO₂ besser als von Luft. Durch die bessere Kühlwirkung von CO₂ kann eine geringere Gasmenge genügen, um den Konverter ausreichend zu kühlen. Eine geringe Gasmenge bedeutet weniger Blasen in der Schmelze und damit weniger Spritzer. Außerdem kann die Menge an Sauerstoff reduziert werden, sodass ein Sauerstoffüberschuss abgemildert oder gar vermieden werden kann.

Ferner ist dem CO₂ reiner Sauerstoff zugesetzt, so dass der Sauerstoffbedarf des Kupfersteins besonders genau und wirkungsvoll gedeckt werden kann. Dies schließt jedoch nicht aus, dass Luft einen zusätzlichen Bestandteil des Prozessgases bildet.

Dadurch, dass die gesamte Gasmenge in der Erfindung wesentlicher geringer als im Stand der Technik ist, ist auch der Sauerstoffanteil im Gas größer als in der Luft. Hierdurch liegt Sauerstoff mit einem höheren Partialdruck vor. Dies führt zu einer besseren chemischen Verwertung des Sauerstoffs im Konverter.

Insgesamt ergeben sich im Peirce-Smith-Konverter weniger Spritzer, weniger Staub, weniger Blasen und weniger Ansätze um die Öffnung herum. Da weniger Gas zugeführt wird, kann auch die Anzahl der Blasdüsen (Tuyeres) verringert werden. Außerdem kann die Größe der Abgasreinigungsanlage verringert werden. Dieser Effekt wird dadurch verstärkt, dass die Abdeckung des Konverters nicht abgedichtet ist und daher etwa die gleiche Menge an Luft angesaugt wird, wie Abgas produziert wird.

CO₂ hat eine höhere Dichte im Vergleich zu Luft. Trotz der geringeren Menge wird ein höherer Impuls aufrechterhalten, der ein Zusetzen der Blasdüsen verringert oder vermeidet. Dies gilt vor allem in Verbindung mit einer geringeren Anzahl von Blasdüsen. Durch die Verwendung von Kohlendioxidgas und Sauerstoffgas als Prozessgas kann die Notwendigkeit des Freischlagens vermindert oder gar gänzlich vermieden werden.

Grundsätzlich gilt, dass der Kühleffekt am Peirce-Smith-Konverter den Flaschenhals darstellt. Da die Kühlung nach der Erfindung verbessert ist, kann die Produktion des ganzen Werkes besser gesteuert werden. Das CO₂ ist vorzugsweise sehr kalt, d.h., so kalt wie technisch machbar. Je kühler das CO₂ ist, umso wirksamer ist die Kühlung der Konverterwand und der Auskleidung, und umso geringer ist der Bedarf an Kühlgas.

In einer bevorzugten Ausgestaltung ist das Verfahren **dadurch gekennzeichnet, dass** das Kohlendioxid in dem Prozessgas wenigstens teilweise dem Abgas des Konverters entstammt. Auf diese Weise kann auch der Verbrauch an flüssigem CO₂ verringert und die Wirtschaftlichkeit der Anlage verbessert werden.

In einer bevorzugten Ausgestaltung weist das Verfahren die weiteren Schritte auf: Verdampfen von flüssigem Kohlendioxid, vorzugsweise unter Ausnutzung von in dem Abgas enthaltener Wärme; und Verwenden des gewonnenen Kohlendioxidgases als Bestandteil des Prozessgases. Das Kohlendioxidgas als Bestandteil des Prozessgases wird während des Betriebs des Konverters in zeitlich veränderlicher Menge benötigt. Es ist daher vorteilhaft, wenn es in kompakter, also flüssiger, Form gelagert und nach Bedarf in Gasform bereitgestellt wird. Das Abgas muss im Verlauf seiner Behandlung gekühlt werden. Dies kann z.B. mit Wärmetauschern geschehen, die z.B. mit Luft betrieben werden. Die aufgeheizte Kühlluft kann wiederum zur Verdampfung flüssigen Kohlendioxids verwendet werden. Gleiches gilt, wenn die Wärmetauscher mit Kühlwasser betrieben werden. Der Wärmeaustausch kann auch direkt zwischen Abgas und CO₂ ohne vermittelndes Wärmeübertragungsmedium stattfinden. Die Ausnutzung der in dem Abgas enthaltenen Wärme kann den Wirkungsgrad der Anlage verbessern. Da (bis auf ein Hochfahren der Anlage aus dem kalten Zustand) keine zusätzliche Heizung erforderlich ist, kann die Wirtschaftlichkeit der Anlage verbessert werden. Da das im Abgas-Wärmetauscher verwendete, aufgeheizte Kühlmedium bei der Verdampfung des flüssigen Kohlendioxids wieder abgekühlt wird, können Umweltbelastungen verringert werden, wenn das Wärmeübertragungsmedium in die Umgebung entlassen wird.

In einer bevorzugten Ausgestaltung weist das Verfahren die weiteren Schritte auf: Sammeln des Abgases in einer Abzugshaube; Kühlen des Abgases; Reinigen des Abgases, vorzugsweise durch elektrostatisches Filtern und/oder Nasswäsche; Trocknen des Abgases, insbesondere durch Abscheiden von Wasser aus dem Abgasstrom; und Verflüssigen von in dem Abgas enthaltenem Schwefeldioxidgas, vorzugsweise durch weiteres Abkühlen des Abgases auf eine Temperatur, die unterhalb des Siedepunkts von Schwefeldioxid liegt, und Abscheiden sowie vorzugsweise Sammeln des flüssigen Schwefeldioxids aus dem Abgasstrom. Durch die Kühl- und Reinigungsschritte bei der Behandlung des Abgases, ist es möglich, das in dem Abgas enthaltene SO₂ zu verflüssigen und einer weiteren Verwendung, etwa bei der Herstellung von Schwefelsäure, zuzuführen.

In einer bevorzugten Ausgestaltung weist das Verfahren die weiteren Schritte auf: Verdampfen von flüssigem Sauerstoff, vorzugsweise unter Ausnutzung von in dem Abgas enthaltener Wärme; und Verwenden des gewonnenen Sauerstoffgases als Bestandteil des Prozessgases. Das Abgas muss im Verlauf seiner Behandlung gekühlt werden. Die Ausnutzung der in dem Abgas enthaltenen Wärme bei der Verdampfung des flüssigen Sauerstoffs kann den Wirkungsgrad der Anlage verbessern. Da (bis auf ein Hochfahren der Anlage aus dem kalten Zustand) keine zusätzliche Heizung erforderlich ist, kann die Wirtschaftlichkeit der Anlage verbessert werden.

In einer bevorzugten Ausgestaltung weist das Verfahren die weiteren Schritte auf: Verdichten des Abgases; und Verflüssigen von in dem Abgas enthaltenem Kohlendioxidgas, wobei in dem Schritt des Verdichtens das Abgas auf einen Druck verdichtet wird, bei welchem das Kohlendioxid beim nachfolgenden Verflüssigen nicht gefriert. Durch diese Schritte wird die Nutzung des in dem Abgas enthaltenen Kohlendioxids möglich. Dadurch kann die Wirtschaftlichkeit der Anlage verbessert und die CO₂-Emissionen verringert werden.

In einer bevorzugten Ausgestaltung weist das Verfahren die weiteren Schritte auf: Zwischenlagern des in dem Schritt des Verflüssigens gewonnenen flüssigen Kohlendioxids in einem Pufferbehälter; und Verdampfen des in dem Pufferbehälter zwischengelagerten flüssigen Kohlendioxids, um als Kohlendioxidgas den Blasdüsen zugeführt zu werden, wobei vorzugsweise dem Pufferspeicher flüssiges Kohlendioxid aus einem Kohlendioxidtank zugeführt wird, wenn ein Schwellenwert des Füllstands unterschritten wird. Auf diese Weise kann der Bedarf an Kohlendioxid als Bestandteil des Prozessgases durch Befüllen eines Zwischenlagertanks, aus welchem das flüssige CO₂ zur erneuten Verdampfung abgezogen wird, aus dem Abgas weitgehend gedeckt werden

In einer bevorzugten Ausgestaltung weist der Schritt des Verflüssigens des Kohlendioxids die Teilschritte auf: Abkühlen des Abgases auf eine Temperatur, die unterhalb des Siedepunkts von Kohlendioxid liegt, vorzugsweise unter Ausnutzung der Kälte des flüssigen Sauerstoffs, der während dieses Schritts verdampft wird, und Abscheiden des flüssigen Kohlendioxids. Auf diese Weise ist es möglich, Wärme direkt zwischen dem abzukühlenden CO₂ und dem zu erwärmenden Sauerstoff auszutauschen. Beide Vorgänge können in einem Bauteil integriert werden. Dies kann den Wirkungsgrad und die Wirtschaftlichkeit der Anlage weiter verbessern.

In einer bevorzugten Ausgestaltung ist das Verfahren **dadurch gekennzeichnet, dass** das Sauerstoffgas dem in dem Schritt des Verdampfens gewonnenen Kohlendioxidgas zugemischt wird. Auf diese Weise wird ein Prozessgas erhalten, das ein Gemisch aus Kohlendioxid und Sauerstoff enthält. Das Gemisch kann dem Konverter in einer Sammelleitung zugeführt werden.

In einer bevorzugten Ausgestaltung ist das Verfahren **dadurch gekennzeichnet, dass** dem Abgas das Kohlendioxid durch Druckwechseladsorption entzogen wird. Damit wäre eine Kühlung des Abgases zur Abtrennung des Kohlendioxids nicht erforderlich; das abgetrennte CO₂ könnte in einem Drucktank gesammelt und zur weiteren Verwendung gespeichert werden.

In einer bevorzugten Ausgestaltung ist das Verfahren **dadurch gekennzeichnet, dass** das Abgas durch Luft gekühlt wird, insbesondere durch Luft, die wenigstens teilweise dem Abgas nach Entnahme des flüssigen Kohlendioxids entstammt, wobei vorzugsweise die in dem Schritt des Verdampfens des flüssigen Kohlendioxids benötigte Wärme wenigstens teilweise der Luft entnommen wird, die zuvor für die Kühlung des Abgases verwendet wurde. Auf diese Weise kann einerseits die in dem Abgas enthaltene Wärme wirksam zur Verdampfung flüssigen Kohlendioxids ausgenutzt werden. Andererseits kann die nach der Abscheidung des flüssigen CO₂ kalte Abluft noch einmal verwendet werden. Hierdurch kann erneut der Wirkungsgrad der Anlage gesteigert werden.

In einer bevorzugten Ausgestaltung ist das Verfahren **dadurch gekennzeichnet, dass** dem Abgas vergleichsweise kalte Luft beigemischt wird, vorzugsweise im Bereich der Abzugshaube. Auf diese Weise kann die Temperatur der Abgase von Beginn der Abgasstrecke an gesenkt werden. Die thermische Belastung der Materialien und die Wärmeabstrahlung der Abgaskanäle kann verringert werden. Auch ist eine Kühlung der Abzugshaube möglich. Die Abdeckung eines Peirce-Smith-Konverters wird herkömmlicherweise mit Wasser gekühlt. Wird eine Luftkühlung vorgesehen, kann diese die Wasserkühlung unterstützen oder sogar vollständig ersetzen.

In einer bevorzugten Ausgestaltung ist das Verfahren **dadurch gekennzeichnet, dass** Kohlendioxidgas und Sauerstoffgas in getrennten Gasströmen in den Konverterinnenraum geleitet werden, wobei vorzugsweise jeweils ein Kohlendioxidgasstrom einen Sauerstoffgasstrom ummantelnd in den Konverterinnenraum geleitet wird. Mit einer solchen Mantelströmung kann einerseits Sauerstoff in den Konverterinnenraum geblasen werden, andererseits die unmittelbare Umgebung des Sauerstoffstrahls gekühlt werden. Dadurch kann dem thermischen Abrieb eines Auskleidungsmaterials des Konverters entgegengewirkt werden, und die Standzeit einer Konverterauskleidung verlängert werden. Ferner hat CO₂ Vorteile in der Handhabung und Rückgewinnung aus dem Abgas gegenüber anderen Kältemitteln wie etwa Stickstoff, und hat auch eine höhere Dichte und damit einen höheren Impuls als Stickstoff.

In einer bevorzugten Ausgestaltung ist das Verfahren **dadurch gekennzeichnet, dass** mehrere Konverter parallel betrieben werden, wobei die Konverter in Zyklen zeitlich versetzt betrieben werden. Der Betrieb eines Konverters ist üblicherweise diskontinuierlich. Als ein Verfahrenszyklus kann z.B. die Befüllung des Konverters mit aufgeschmolzenem Kupferstein, das Verblasen, vorzugsweise in zwei Stufen (Schlackenblasen und Fertigblasen), das Abführen der Schlacke und das Entleeren des Rohkupfers verstanden werden. Wenn mehrere Konverter parallel betrieben werden und die Konverter in Zyklen zeitlich versetzt betrieben werden, kann die Nachbearbeitung der Abgase in der Schwefelsäureanlage annähernd kontinuierlich durchgeführt werden.

Nach einem weiteren Gesichtspunkt der Erfindung ist eine Vorrichtung zur Verhüttung eines Metalls, vorzugsweise Kupfer, Eisen, Blei und/oder Zink, aufweisend einen Konverter, vorzugsweise einen Peirce-Smith-Konverter oder dergleichen, vorgesehen, wobei die Vorrichtung ausgelegt und angepasst ist, die Schritte des vorstehend vorgeschlagenen Verfahrens durchzuführen.

### Kurzbeschreibung der Zeichnungen

Weitere Gesichtspunkte, Vorteile und Merkmale der vorliegenden Erfindung werden aus der nachstehenden Beschreibung und den beigefügten Zeichnungen besonders bevorzugter Ausführungsformen der Erfindung ersichtlich werden.
FIG. 1 ist ein schematischer Plan einer Peirce-Smith-Konverteranlage in einer ersten Ausführungsform der Erfindung.
FIG. 2 ist ein schematischer Plan einer Prozessgasseite einer Peirce-Smith-Konverteranlage in einer zweiten Ausführungsform der Erfindung.
FIG. 3 ist eine schematische Schnittdarstellung einer Mantelstrom-Blasdüse im Betrieb in einer dritten Ausführungsform der Erfindung.

### Beschreibung bevorzugter Ausführungsformen

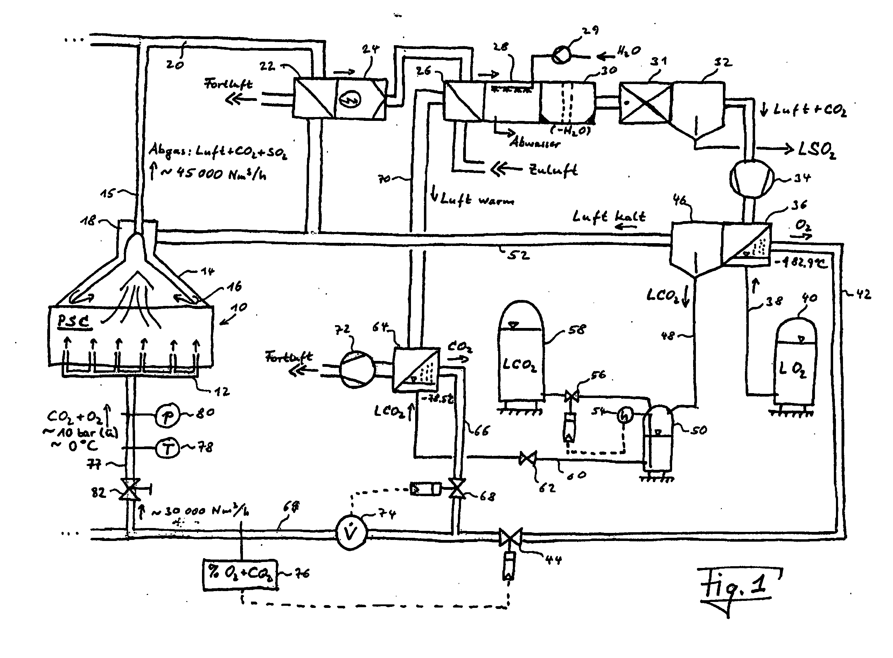

Eine erste Ausführungsform der Erfindung wird nachstehend unter Bezugnahme auf FIG. 1 erläutert werden. Dabei zeigt FIG. 1 ein Ausführungsbeispiel einer erfindungsgemäßen Konverteranlage, wobei in der Darstellung nur ein Peirce-Smith-Konverter (PSC) 10 schematisch gezeigt ist. Weitere Konverter können angeschlossen sein.

In einer Seitenwand des Konverters 10 sind eine Reihe von Blasdüsen in einer Blasdüsenanordnung 12 vorgesehen, die sich zum Innenraum des Konverters 10 hin öffnen. Obschon in der Figur nicht gezeigt, ist die Wandung des Konverters 10 mit einer feuerfesten Auskleidung versehen. Oberhalb des Konverters 10 ist eine Abzugshaube 14 angeordnet, die in eine Abgasleitung 15 mündet. Die Abzugshaube 14 weist eine verdoppelte Wand auf, durch welche hindurch Luft strömt, die dem unteren Bereich der Abzugshaube 14 als Luftvorhang 16 zugeführt wird. Die hierzu benötigte Luft wird über einen Kühlluftanschluss 18 im oberen Bereich der Abzugshaube 14 eingeleitet. Obschon in der Figur nicht näher dargestellt, kann die Abzugshaube 14 auch Luft aus der Umgebung ansaugen. Eine zusätzliche Wasserkühlung der Abzugshaube 14 ist denkbar, aber jedenfalls nicht näher dargestellt.

Der Innenraum des Konverters (PSC) 10 wird diskontinuierlich mit kupferhaltigem Kupferstein glutflüssig befüllt. Der Kupferstein wird in vorgeordneten Verfahrensschritten aus einem kupferhaltigen Erz gewonnen und enthält unter anderem Eisen-und Kupfersulfid.

Dem Innenraum des Konverters (PSC) 10 wird über die Blasdüsenanordnung 12 ein sauerstoffhaltiges Prozessgas zugeführt, mit dessen Hilfe der Kupferstein verblasen wird. Bei diesem Vorgang wird der Schwefel vom Kupfer und anderen Metallen wie etwa Eisen gelöst und zu Schwefeldioxid (SO₂) oxidiert. Der Großteil des Eisens wird in Schlacke gebunden, die abgegossen wird. Es verbleibt Rohkupfer mit einem hohen Kupferanteil und Restanteilen von unedlen und edlen Metallen.

Das Prozessgas enthält auch Kohlendioxid (CO₂). Das Kohlendioxid, vorzugsweise technisch reines, sehr kaltes Kohlendioxid, dient der Kühlung der Konverter.

Das Abgas des Konverters enthält somit neben Luft auch Schwefeldioxid (SO₂) und Kohlendioxid. Beide Gase werden dem Abgas nach und nach entzogen, wie nachstehend im Einzelnen erläutert.

Die Abgasleitung 15 des PSC 10 mündet in eine Abgassammelleitung 20, an der noch weitere Abgasleitungen von anderen Konvertern (nicht näher dargestellt) angeschlossen sind. Das Abgas wird zunächst in einem Wärmetauscher 22 gekühlt und in einem elektrostatischen Filter 24 von Schwebteilen, Staub etc. befreit. Danach wird das Abgas in einem weiteren Wärmetauscher 26 gekühlt und in einem Wasserwandfilter oder Nassfilter 28 gewaschen. Der Nassfilter 28 erhält Wasser über eine Wasserpumpe 29. Das gesammelte Abwasser kann als Waschlösung weiterverwendet oder, nach Entfernung von Schadstoffen, abgeleitet werden.

Je nach Gaszusammensetzung können noch weitere Kühl- und/oder Reinigungsstufen vorgesehen sein, die hier aber nicht näher dargestellt sind.

Das vorgekühlte und gefilterte Abgas wird einem Trockner 30 zugeführt, in welchem Wasser entfernt wird. Es kann sich, wie in der Figur schematisch angedeutet, bei dem Trockner 30 um einen Adsorptionsentfeuchter, um ein Gerät anderen Wirkprinzips oder eine komplexe Anlage mit mehreren Stufen handeln.

Danach wird das Abgas in einem Elektrokühler 31 so weit abgekühlt, dass das SO₂ sich verflüssigt (also wenigstens unter den Siedepunkt von SO₂, der bei -10°C liegt). Das verflüssigte Schwefeldioxid kann in einem Abscheider 32 rückstandsfrei abgezogen werden. Das abgezogene, flüssige Schwefeldioxid (LSO₂ - liquides SO₂) wird in Behältern (nicht näher dargestellt) gesammelt oder über eine Rohrleitung einer weiteren Verwendung, vorzugsweise einer Anlage zur Schwefelsäureherstellung, zugeführt oder direkt verkauft werden.

Es verbleibt das Abgas, das im Wesentlichen aus Luft und CO₂ besteht. Das Restabgas wird mittels eines Kompressors 34 verdichtet, damit bei der nachfolgenden Abkühlung flüssiges CO₂ entsteht: Ohne Verdichtung würde Trockeneis entstehen. Die Verflüssigung erfolgt beispielsweise durch Wärmeaustausch. Die Verflüssigung kann mit der Unterstützung von Flüssigsauerstoff (LO₂) betrieben werden, der über einen Wärmetauscher 36 aus dem Restabgas Wärme entzieht und dabei verdampft. Der Wärmetauscher 36 arbeitet also einerseits als Verflüssiger für das CO₂ im Abgas und andererseits als Verdampfer für den flüssigen Sauerstoff. Der Wärmetauscher (CO₂-Verflüssiger) 36 und der Verdichter 34 können in einem Gerät integriert sein.

Der flüssige Sauerstoff wird dem Wärmetauscher 36 über eine LO₂-Leitung 38 aus einem LO₂-Behälter 40 zugeführt, in dem Wärmetauscher 36 auf wenigstens den Siedepunkt von Sauerstoff (-182,9 °C) erwärmt und verlässt den Wärmetauscher 36 als Sauerstoffgas über eine O₂-(Gas-)Leitung, die über ein Ventil (O₂-Ventil) 44 steuerbar ist. Das in dem Wärmetauscher 36 verflüssigte CO₂ wird in einem Abscheider 46 abgeschieden und über eine LCO₂-Abscheiderleitung 48 in einem LCO₂-Pufferbehälter 50 aufgefangen.

Die beim Verflüssigen von CO₂ übrig bleibende, kalte Luft wird zum Kühlen verwendet. Und zwar wird die kalte Luft über eine Kühlluftleitung 52 dem Kühlluftanschluss 18 der Abzugshaube des Konverters 10 und dem ersten Wärmetauscher 22 zugeführt. Statt, wie in der Figur dargestellt, sich zu dem Kühlluftanschluss 18 und dem Wärmetauscher 22 zu verzweigen, kann die Kühlluftleitung 52 auch zunächst durch den Wärmetauscher 22 hindurch und von dort zu dem Kühlluftanschluss 18 des Konverters 10 führen.

Der Füllstand des LCO₂-Pufferbehälters 50 wird über einen Füllstandsmesser 54 überwacht. Die Füllhöhe h kann dabei indirekt, z.B. über Wägen oder andere Methoden, ermittelt werden. Ferner kann dem LCO₂-Pufferbehälter 50 bei niedrigem Füllstand flüssiges Kohlendioxid (LCO₂) über ein Ventil (LCO₂-Zuflussventil) 56 aus einem LCO₂-Lagerbehälter 58 zugeführt werden. Hierzu wird der durch den Füllstandsmesser 54 gemessene Füllstand einem Regler zugeführt, der mit dem Steller des Ventils 56 verbunden ist. Bei niedrigem Füllstand öffnet das Ventil 56 und lässt flüssiges CO₂ aus dem Lagerbehälter 58 in den Pufferbehälter 50 strömen, bis eine vorgeschriebene Sollhöhe erreicht ist. Ein solches Nachfüllen kann insbesondere beim Anfahren der Anlage erforderlich sein, wenn noch kein Kohlendioxid aus dem Abgas vorhanden ist. Auch eventuelle Prozessverluste können so ausgeglichen werden.

Das flüssige Kohlendioxid, das in dem Pufferbehälter 50 gespeichert ist, wird bei Bedarf über eine LCO₂-Leitung 60, die durch ein Ventil (LCO₂-Ventil) 62 steuerbar ist, abgezogen, und mittels eines CO₂-Verdampfers 64 verdampft und strömt von dort in eine CO₂-Leitung 66, die durch ein Ventil (CO₂-Ventil) 68 steuerbar ist. Stromabwärts des CO₂-Ventils 68 und des O₂-Ventils 44 vereinigen sich die CO₂-Leitung 66 und die O₂-Leitung 44 zu einer gemeinsamen Prozessgas-Verteilerleitung 69.

Die Verdampfung des flüssigen Kohlendioxids in dem CO₂-Verdampfer 68 erfolgt nach dem Prinzip des Wärmetauschens mit warmer Luft, die über eine Warmluftleitung 70 von dem zweiten (Abgas-)Wärmetauscher 26 herangeführt wird, nachdem sie dort das Abgas gekühlt hat. Ein Gebläse 72 saugt Zuluft durch den CO₂-Verdampfer 64, die Warmluftleitung 70 und den Wärmetauscher 26 an und entlässt sie als Fortluft wieder in die Umgebung. Alternativ können der Wärmetauscher 26 und der CO₂-Verdampfer 64 auch in einem einzigen Gerät integriert sein, wie es bei dem O₂-Verdampfer 36 der Fall ist. Es kann auch ein Nebenstrom des Abgases zur Verdampfung des flüssigen Kohlendioxids verwendet werden.

In der Prozessgas-Verteilerleitung 69 wird der Volumenstrom mittels eines Strömungsmessers 74 gemessen. In Abhängigkeit von dem Ausgangssignal des Strömungsmessers 74 wird der Öffnungszustand des CO₂-Ventils 68 gesteuert. Ferner wird die Gaszusammensetzung, d.h., das prozentuale Verhältnis von Sauerstoff und Kohlendioxid, in der Prozessgasleitung 69 durch einen Gasanalysator 76 ermittelt. In Abhängigkeit von dem Ausgangssignal des Gasanalysators 74 wird der Öffnungszustand des O₂-Ventils 44 gesteuert. So können Gasmenge und Gaszusammensetzung automatisch eingestellt werden.

Von der Prozessgas-Verteilerleitung 69 geht eine Prozessgasleitung 77 zu der Blasdüsenanordnung 12 des Peirce-Smith-Konverters 10 ab. Die Prozessgas-Verteilerleitung 69 führt noch zu weiteren Konvertern (nicht näher dargestellt) in der Anlage. In der Prozessgasleitung 77 sind ein Temperaturmesser 78 und ein Druckmesser 80 angeordnet. In einem nicht näher dargestellten Steuergerät können die Zustandswerte des Prozessgases ausgewertet werden und zur Ermittlung von Vorgabewerten für Volumenstrom und Zusammensetzung des Prozessgases verwendet werden. Die Sollwerte für Temperatur und Druck des Prozessgases liegen in dem dargestellten Beispiel bei 0°C bzw. 10 bar (ü), können aber nach Bedarf an die jeweils vorliegenden Gegebenheiten und Besonderheiten angepasst werden. Die Prozessgasleitung 77 für den Konverter 10 ist mittels eines Ventils 82 gesteuert absperrbar.

Die Zustandsgrößen des Kohlendioxids d.h., dessen Reinheit, Strömungsrate, Druck und Temperatur bedürfen einer genauen Überwachung, um eine Kondensierung oder Resublimation in der Verrohrung zuverlässig zu vermeiden.

Wie bereits erläutert, sind in der Anlage mehrere Konverter 10 vorgesehen, von denen aber nur einer dargestellt ist. Die Konverter arbeiten diskontinuierlich und zyklisch. Der Ablauf von der Befüllung mit glutflüssigem Kupferstein bis zum Abgießen des Rohkupfers kann als Zyklus eines Konverters 10 betrachtet werden. Zwischen den Zyklen wird jeder Konverter 10 gesäubert und begutachtet, um z.B. Schäden an der feuerfesten Auskleidung rechtzeitig erkennen und beheben zu können. Um einen quasikontinuierlichen Betrieb der Anlage zu ermöglichen, werden die Zyklen der einzelnen Konverter zeitlich versetzt begonnen.

In dem vorstehend dargestellten Ausführungsbeispiel sind das Durchflussmessgerät (der Strömungsmesser) 74 und der Gasanalysator 76 in der Prozessgasleitung gemeinsam für alle Konverter in der Anlage vorgesehen. Dabei kann das zentrale Steuergerät (nicht näher dargestellt) Sollwerte anhand des Gesamtbedarfs ermitteln. Der Temperaturmesser 78 und der Druckmesser 80 sind dagegen in der individuellen Prozessgasleitung 77 des Konverters 10 vorgesehen, um den individuellen Gegebenheiten in dem Konverter Rechnung tragen zu können. Es ist denkbar, auch nur einen Temperaturmesser 78 und einen Druckmesser 80 in der Prozessgas-Verteilerleitung 69 vorzusehen.

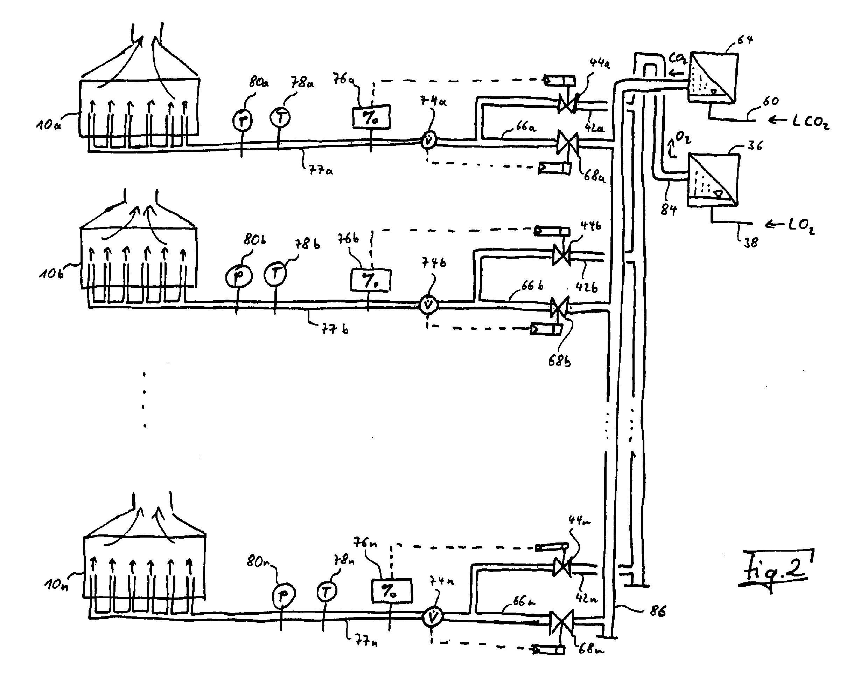

Zur feineren und individuellen Einstellung des Prozessgases für jeden in der Anlage vorhandenen Konverter können umgekehrt auch die O₂-Leitung 44 und die CO₂-Leitung 68 mit allen Armaturen und Messgeräten für jeden Konverter einzeln vorhanden sein. Eine solche Anordnung ist als zweite Ausführungsform in FIG. 2 gezeigt. In der FIG. 2 ist nur die Prozessgasseite der Anlage schematisch dargestellt; die Abgasseite entspricht der Darstellung der ersten Ausführungsform in FIG. 1.

Gemäß der Darstellung in FIG. 2 sind in einer Konverteranlage mehrere Konverter 10a, 10b, ..., 10n vorgesehen. Jedem der Konverter ist eine individuelle Prozessgasleitung 77a, 77b, ..., 77n zugeordnet, in welcher jeweils ein Durchflussmesser 74a, 74b, ..., 74n, ein Gasanalysator 76a, 76b, ..., 76n, ein Temperaturmesser 78a, 78b, ..., 78n und ein Druckmesser 80a, 80b, ..., 80n vorgesehen sind.

Wie in der ersten Ausführungsform sind auch hier ein O₂-Verdampfer 36 und ein CO₂-Verdampfer 64 vorgesehen. Von dem O₂-Verdampfer 36 geht aber nun eine O₂-Verteilerleitung 84 ab, von welcher jeweils eine O₂-Gasleitung 42a, 42b, ..., 42n, die einzeln durch ein Ventil (O₂-Ventil) 44a, 44b, ..., 44n steuerbar ist, für jeden Konverter 10a, 10b, ..., 10n abzweigt. Gleichermaßen geht von dem CO₂-Verdampfer 64 eine CO₂-Verteilerleitung 86 ab, von welcher jeweils eine CO₂-Gasleitungen 66a, 66b, ..., 66n, die einzeln durch ein Ventil (CO₂-Ventil) 68a, 68b, ..., 68n steuerbar ist, für jeden Konverter 10a, 10b, ..., 10n abzweigt. Die Gasleitungen 42a, 42b, ..., 42n und 66a, 66b, ..., 66n laufen jeweils in den Prozessgasleitungen 77a, 77b, ..., 77n zusammen. Die Ansteuerung der Ventile erfolgt für jeden Strang einzeln jeweils anhand der Kriterien, die vorstehend für die Anordnung nach der ersten Ausführungsform erläutert wurden.

Der restliche Aufbau der Anlage, insbesondere die Behandlung des Abgases, und der Gesamtablauf des Konverterverfahrens, entspricht der ersten Ausführungsform. Eine erneute Erläuterung wird zur Vermeidung von Wiederholungen weggelassen.

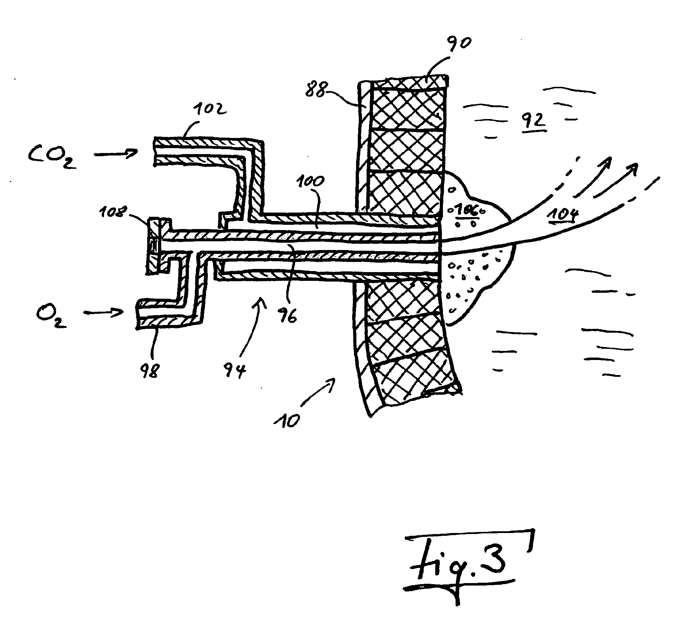

In einer Abwandlung können auch Sauerstoff und Kohlendioxid getrennt in den Konverter 10 geleitet werden. Eine besonders vorteilhafte Ausgestaltung dieser Möglichkeit wird anhand FIG. 3 als dritte Ausführungsform der Erfindung gezeigt. Bei dieser dritten Ausführungsform werden Sauerstoffgas und Kohlendioxidgas dem Konverterinnenraum getrennt über Manteldüsen derart zugeführt, dass das Sauerstoffgas von einem Kohlendioxidmantel umhüllt wird. FIG. 3 zeigt eine Manteldüse im Längsschnitt in einem Abschnitt der Konverterwand und ihre Wirkungsweise.

Gemäß der Darstellung in FIG. 3 weist der Konverter 10 eine Wand 88 auf, die mit einer Auskleidung 90 versehen ist. Die Auskleidung 90 besteht z.B. aus einer Anordnung feuerfester Ziegel. Im Innenraum des Konverters, der durch die Auskleidung 92 begrenzt ist, befindet sich Kupferstein 92 in Schmelze.

In die Konverterwand 88 sind sich mehrere Mantelstrom-Blasdüsen 94 eingesetzt, von denen eine in der Figur im Längsschnitt mit einem Ausschnitt der Konverterwand 88 dargestellt ist. Die Mantelstrom-Blasdüse 94 reicht durch die Konverterwand 88 und die Auskleidung 90 hindurch und mündet an deren innerer Begrenzung. Die Mantelstrom-Blasdüse 94 weist ein Innenrohr 96 auf, das mit einem Sauerstoffgasanschluss 98 in Verbindung steht. Das zugeführte Sauerstoffgas (O₂) tritt am Mündungsende als Strahl 104 in die Kupferstein-Schmelze 92 ein, wo es sich verteilt und die prozessgemäßen Aufgaben erfüllt. Das Innenrohr 96 ist von einem Mantelrohr 100, das mit einem Kohlendioxidgasanschluss 102 in Verbindung steht, umgeben. Das zugeführte Kohlendioxidgas (CO₂) tritt, den O₂-Strahl 104 mantelförmig umgebend, am Mündungsende in die Kupferstein-Schmelze 92 ein und kühlt dabei die Konverterwand 88, die Auskleidung 90 und damit zumindest mittelbar auch die Kupferstein-Schmelze 92 in der unmittelbaren Umgebung der Austrittsöffnung der Mantelstrom-Blasdüse 94 wirksam ab und vermischt sich dann mit dem O₂-Strahl 104. Es bildet sich um die Austrittsöffnung herum ein locker-blasiger Absatz 106 aus erstarrtem, quasi aufgeschäumtem Kupferstein, der zwar von im Bereich des Mündungsendes der Düse 94 von dem O₂-Strahl 104 und dem darin enthaltenen CO₂ weggeblasen wird, sich aber um die Austrittsöffnung der Düse 94 herum auf der Auskleidung 90 absetzt und eine zusätzliche Schutzschicht ausbildet, welche eine thermische Erosion der Auskleidung 90 an dieser besonders anfälligen Stelle verhindert.

Am hinteren Ende der Mantelstrom-Blasdüse 94 weist diese einen Verschluss 108 auf, der, falls es doch einmal erforderlich werden sollte, abnehmbar ist und ein mechanisches Freischlagen der Düse ermöglicht. Außerdem kann der Verschluss 108 zur Beobachtung ein Sichtfenster aufweisen. Anstelle des Verschlusses 108 kann auch ein Kugelhahn zum Freischlagen vorgesehen sein.

Vorstehend wurden bevorzugte Ausführungsbeispiele anhand der Figuren erläutert. Weitere Abwandlungen können bestimmte Verfahrensdetails betreffen, ohne den Gedanken und die Anwendbarkeit der Erfindung zu berühren.

Eine verschlechterte Ausführungsform kann auch CO₂, Sauerstoff und Luft zuführen. Je größer der Luftanteil ist, desto größer ist die Effizienzveriust. Die Zuführung von CO₂ führt jedoch immer zu einer Steigerung gegenüber herkömmlichen Verfahren.

Bei einer Abwandlung kann auch CO₂ und/oder Sauerstoff flüssig dem Peirce-Smith-Konverter zugeführt werden. Der oder die Verdampfer 36/64 kann/können dann entfallen.

Da die Anlage üblicherweise mit mehreren Konvertern zyklisch versetzt betrieben wird, sollte auch zwischen den Zyklen eines einzelnen Konverters immer genügend Abgas zirkulieren, um die erforderliche Wärme zur Verdampfung des Sauerstoffs und des Kohlendioxids in den Verdampfern 36 und 64 bereitzustellen. Soll jedoch die gesamte Anlage aus dem vollständigen Stillstand angefahren werden, so können die Verdampfer 36 und 64 zusätzliche Heizeinrichtungen, etwa eine elektrische oder eine Warmwasserheizung, aufweisen, um das Prozessgas in dieser Phase zu erzeugen.

Im quasikontinuierlichen Betrieb und unter voller Auslastung kann der Pufferbehälter 50 umgangen werden, um das dem Abgasstrom entnommene CO₂ direkt dem Prozess wieder zuzuführen. Wenn zu viele Konverter außer Betrieb sind, kann das Einblasen von CO₂ über das Ventil 62 angehalten und der Pufferbehälter 50 mit flüssigem CO₂ aufgefüllt werden. Auch eine Rückführung von dem Pufferbehälter 50 in den Lagerbehälter 58 ist denkbar. Falls der Pufferbehälter 50 (und ggf. der Lagerbehälter 58) voll ist, kann auch die Sauerstoffzufuhr beendet werden, sodass nur noch Luft über die Abzugshaube 14 angesaugt wird. In diesem Fall werden die Wärmetauscher 36, 64 außer Betrieb gesetzt und das Abgas über einen Kamin in die Umgebung entlassen.

Im Fall eines Problems im Anlagenbetrieb kann der Abgaskompressor dem System komprimierte Luft zuführen, um einen Notbetrieb aufrechtzuerhalten, ohne CO₂ zu zurückzuführen. Der CO₂-Verflüssiger wird in diesem Fall außer Betrieb gesetzt.

Die abgasseitige Strecke bis zur Abscheidung des SO₂ ist in weiten Teilen beispielhaft und schematisch dargestellt. Es ist ohne weiteres denkbar, die Anzahl der Kühlstufen, die Art und Weise der Reinigungs-, Filter-, Kühl-, Trocknungseinrichtungen und der Rückgewinnung des SO₂ und des CO₂ aus dem Abgas sind optional und können im Rahmen des fachmännischen Wissens und Könnens abgeändert werden Auch die Lagerung, Erzeugung, Behandlung und Führung des Prozessgases und seiner Bestandteile kann anders gehandhabt werden.

Z.B. könnte das CO₂ auf dem Wege der Druckwechsel-Adsorption (ggf. Vakkum-Druckwechsel-Adsorption) eingefangen und die verbleibende Luft abgeführt werden (Adsorption). In diesem Fall wäre keine weitere Kühlung erforderlich, ggf. auch keine vorherige Verdichtung. Da keine Kühlung durch flüssigen Sauerstoff erforderlich wäre, könnte der Sauerstoff auch in gasförmigem Zustand bereitgestellt werden. Ein zweiter Behälter würde das für den Prozess erforderliche CO₂ bereitstellen (Desorption). So könnte abwechselnd Desorption und Adsorption stattfinden.

Im Rahmen der Erfindung ist es auch möglich an Stelle eines Druckwechsel-Adsorptionsverfahrens eine Hochtemperatur-Membran zum Trennen von CO₂ aus dem Abgas zu verwenden.

Die Kühlung der Abzugshaube durch die kalte, komprimierte Luft sowie die Nutzung zur Kühlung des Abgases ist optional.

Die Erfindung ist nicht nur bei der Konvertierung von kupferhaltigem Kupferstein und nicht nur bei einem Peirce-Smith-Konverter anwendbar. Eine Anwendung kann in allen Fällen Vorteile bringen, in welchen ein sauerstoffhaltiges Prozessgas einer metallhaltigen Schmelze eingeblasen wird, um störende Bestandteile zu oxidieren und dadurch aus der Schmelze zu entfernen. Das Verfahren kann insbesondere für metallurgische Prozesse, insbesondere Konvertierungsprozesse bei der Herstellung von Eisen, Blei oder Zink eingesetzt werden.

### Liste der Bezugszeichen

- 10: Konverter (10a, 10b, ... 10n)
- 12: Blasdüsenanordnung
- 14: Abzugshaube (Abdeckung)
- 15: Abgasleitung
- 16: Luftvorhang
- 18: Kühlluftanschluss
- 20: Abgas-Sammelleitung
- 22: Wärmetauscher I
- 24: elektrostatischer Filter
- 26: Wärmetauscher II
- 28: Naßfilter
- 29: Wasserpumpe
- 30: Trockner
- 31: Kühler
- 32: SO₂-Abscheider
- 34: Verdichter
- 36: O₂-Verdampfer
- 38: LO₂-Leitung
- 40: LO₂-Lagerbehälter
- 42: O₂-Leitung (42a, 42b, ..., 42n)
- 44: O₂-Ventil (44a, 44b, ..., 44n)
- 46: CO₂-Abscheider
- 48: LCO₂-Abscheiderleitung
- 50: LCO₂-Pufferbehälter
- 52: Kühlluftleitung
- 54: Füllstandsmesser
- 56: LCO₂-Zuflussventil
- 58: LCO₂-Lagerbehälter
- 60: LCO₂-Leitung (60a, 60b, ..., 60n)
- 62: LCO₂-Ventil
- 64: CO₂-Verdampfer
- 66: CO₂-Leitung (66a, 66b, ..., 66n)
- 68: CO₂-Ventil (68a, 68b, ..., 68n)
- 69: Prozessgas-Sammelleitung
- 70: Warmluftleitung
- 72: Gebläse
- 74: Durchflussmesser (74a, 74b, ..., 74n)
- 76: Gasanalysator (76a, 76b, ..., 76n)
- 77: Prozessgasleitung (77a, 77b, ..., 77n)
- 78: Temperaturmesser (78a, 78b, ..., 78n)
- 80: Druckmesser (80a, 80b, ..., 80n)
- 82: Absperrventil
- 84: O₂-Verteilerleitung
- 86: CO₂-Verteilerleitung
- 88: Konverterwand
- 90: Auskleidung
- 92: Kupferstein-Schmelze
- 94: Mantelblasdüse
- 96: Innenrohr
- 98: O₂-Anschluss
- 100: Mantelrohr
- 102: CO₂-Anschluss
- 104: O₂-Strahl
- 106: poröse Absätze
- 108: Verschluss

Es wird ausdrücklich darauf hingewiesen, dass die vorstehende Bezugszeichenliste integraler Bestandteil der Beschreibung ist.

## Patentansprüche

1. Verfahren zum Betreiben eines Konverters, vorzugsweise eines Peirce-Smith-Konverters oder dergleichen, bei der Gewinnung eines Metalls, vorzugsweise Kupfer, Eisen, Blei und/oder Zink, mit den Schritten:
Beladen des Konverters mit einem das Metall enthaltenden Ausgangsmaterial, wobei das Metall in dem Ausgangsmaterial wenigstens teilweise an wenigstens einen Verbindungsstoff, insbesondere Schwefel, chemisch gebunden ist;
Halten einer Temperatur innerhalb des Konverterinnenraums, die oberhalb der Schmelztemperatur des Ausgangsmaterials liegt; und
Zuführen eines Sauerstoff enthaltenden Prozessgases über in der Wandung des Konverters angeordnete Blasdüsen in den Konverterinnenraum,
wobei das über die Blasdüsen zugeführte Gas Kohlendioxid, vorzugsweise sehr kaltes, technisch reines Kohlendioxid, sowie Sauerstoffgas und/oder Luft aufweist,
**dadurch gekennzeichnet, dass**
das Kohlendioxid in dem Prozessgas wenigstens teilweise dem Abgas des Konverters entstammt.

2. Verfahren gemäß Anspruch 1,
weiter **gekennzeichnet durch** die Schritte:
Verdampfen von flüssigem Kohlendioxid, vorzugsweise unter Ausnutzung von in dem Abgas enthaltener Wärme; und
Verwenden des gewonnenen Kohlendioxidgases als Bestandteil des Prozessgases.

3. Verfahren gemäß einem der vorstehenden Ansprüche,
weiter **gekennzeichnet durch** die Schritte
Sammeln des Abgases in einer Abzugshaube;
Kühlen des Abgases;
Reinigen des Abgases, vorzugsweise **durch** elektrostatisches Filtern und/oder Nasswäsche;
Trocknen des Abgases, insbesondere **durch** Abscheiden von Wasser aus dem Abgasstrom; und
Verflüssigen von in dem Abgas enthaltenem Schwefeldioxidgas, vorzugsweise **durch** weiteres Abkühlen des Abgases auf eine Temperatur, die unterhalb des Siedepunkts von Schwefeldioxid liegt, und Abscheiden sowie vorzugsweise Sammeln des flüssigen Schwefeldioxids aus dem Abgasstrom.

4. Verfahren gemäß einem der vorstehenden Ansprüche,
weiter **gekennzeichnet durch** die Schritte:
Verdampfen von flüssigem Sauerstoff, vorzugsweise unter Ausnutzung von in dem Abgas enthaltener Wärme; und
Verwenden des gewonnenen Sauerstoffgases als Bestandteil des Prozessgases.

5. Verfahren gemäß einem der vorstehenden Ansprüche,
weiter **gekennzeichnet durch** die Schritte
Verdichten des Abgases; und
Verflüssigen von in dem Abgas enthaltenem Kohlendioxidgas,
wobei in dem Schritt des Verdichtens das Abgas auf einen Druck verdichtet wird, bei welchem das Kohlendioxid beim nachfolgenden Verflüssigen nicht gefriert.

6. Verfahren gemäß Anspruch 5,
weiter **gekennzeichnet durch** die Schritte
Zwischenlagern des in dem Schritt des Verflüssigens gewonnenen flüssigen Kohlendioxids in einem Pufferbehälter; und
Vergasen des in dem Pufferbehälter zwischengelagerten flüssigen Kohlendioxids, um als Kohlendioxidgas den Blasdüsen zugeführt zu werden,
wobei vorzugsweise dem Pufferspeicher flüssiges Kohlendioxid aus einem Kohlendioxidtank zugeführt wird, wenn ein Schwellenwert des Füllstands unterschritten wird.

7. Verfahren gemäß einem der Ansprüche 5 oder 6, soweit auf Anspruch 4 rückbezogen,
**dadurch gekennzeichnet, dass**
der Schritt des Verflüssigens des Kohlendioxids die Teilschritte aufweist:
Abkühlen des Abgases auf eine Temperatur, die unterhalb des Siedepunkts von Kohlendioxid liegt, vorzugsweise unter Ausnutzung der Kälte des flüssigen Sauerstoffs, der während dieses Schritts verdampft wird, und
Abscheiden des flüssigen Kohlendioxids.

8. Verfahren gemäß einem der Ansprüche 5 bis 7,
**dadurch gekennzeichnet, dass**
das Sauerstoffgas dem in dem Schritt des Verdampfens gewonnenen Kohlendioxidgas zugemischt wird.

9. Verfahren gemäß einem der Ansprüche 1 bis 4,
**dadurch gekennzeichnet, dass**
dem Abgas das Kohlendioxid durch Druckwechseladsorption oder einer Hochtemperatur-Membran entzogen wird.

10. Verfahren gemäß einem der vorstehenden Ansprüche,
**dadurch gekennzeichnet, dass**
das Abgas durch Luft gekühlt wird, insbesondere durch Luft, die wenigstens teilweise dem Abgas nach Entnahme des flüssigen Kohlendioxids entstammt,
wobei vorzugsweise die in dem Schritt des Verdampfens des flüssigen Kohlendioxids benötigte Wärme wenigstens teilweise der Luft entnommen wird, die zuvor für die Kühlung des Abgases verwendet wurde.

11. Verfahren gemäß einem der vorstehenden Ansprüche,
**dadurch gekennzeichnet, dass**
dem Abgas vergleichsweise kalte Luft beigemischt wird, vorzugsweise im Bereich der Abzugshaube.

12. Verfahren gemäß einem der vorstehenden Ansprüche,
**dadurch gekennzeichnet, dass**
Kohlendioxidgas und Sauerstoffgas in getrennten Gasströmen in den Konverterinnenraum geleitet werden, wobei vorzugsweise jeweils ein Kohlendioxidgasstrom einen Sauerstoffgasstrom ummantelnd in den Konverterinnenraum geleitet wird.

13. Verfahren gemäß einem der vorstehenden Ansprüche,
**dadurch gekennzeichnet, dass**
mehrere Konverter parallel betrieben werden, wobei die Konverter in Zyklen zeitlich versetzt betrieben werden.

14. Vorrichtung zur Verhüttung eines Metalls, vorzugsweise Kupfer, Eisen, Blei und/oder Zink, aufweisend einen Konverter, vorzugsweise einen Peirce-Smith-Konverter oder dergleichen, wobei die Vorrichtung ausgelegt und angepasst ist, die Schritte eines Verfahrens nach einem der Schritte 1 bis 13 durchzuführen.

## Claims

1. Method for operating a converter, preferably a Peirce-Smith converter or the like, during the extraction of a metal, preferably copper, iron, lead and/or zinc, comprising the steps of:
loading the converter with a starting material containing the metal, the metal being chemically bound in the starting material at least partially to at least one connective material, in particular sulphur;
maintaining within the interior of the converter a temperature which lies above the melting temperature of the starting material; and
feeding an oxygen-containing process gas into the interior of the converter via tuyeres arranged in the wall of the converter,
the gas fed in via the tuyeres comprising carbon dioxide, preferably very cold, technically pure carbon dioxide, as well as oxygen gas and/or air,
**characterized in that**
the carbon dioxide in the process gas at least partially originates from the exhaust gas of the converter.

2. Method according to Claim 1,
further **characterized by** the steps of:
vaporizing liquid carbon dioxide, preferably using heat contained in the exhaust gas; and
using the carbon dioxide gas obtained as a constituent part of the process gas.

3. Method according to one of the preceding claims, further **characterized by** the steps of:
collecting the exhaust gas in a fume hood;
cooling the exhaust gas;
cleaning the exhaust gas, preferably by electrostatic filtering and/or wet scrubbing;
drying the exhaust gas, in particular by separating water from the exhaust gas stream; and
liquefying sulphur dioxide gas contained in the exhaust gas, preferably by further cooling of the exhaust gas to a temperature that lies below the boiling point of sulphur dioxide, and separating and preferably collecting the liquid sulphur dioxide from the exhaust gas stream.

4. Method according to one of the preceding claims, further **characterized by** the steps of:
vaporizing liquid oxygen, preferably using heat contained in the exhaust gas; and
using the oxygen gas obtained as a constituent part of the process gas.

5. Method according to one of the preceding claims, further **characterized by** the steps of:
condensing the exhaust gas; and
liquefying carbon dioxide gas contained in the exhaust gas,
the exhaust gas being condensed in the condensing step to a pressure at which the carbon dioxide does not freeze during the subsequent liquefaction.

6. Method according to Claim 5,
further **characterized by** the steps of:
intermediately storing the liquid carbon dioxide obtained in the liquefying step in a buffer container; and
gasifying the liquid carbon dioxide intermediately stored in the buffer tank in order to feed it to the tuyeres as carbon dioxide gas,
the buffer store preferably being fed liquid carbon dioxide from a carbon dioxide tank when the filling level falls below a threshold value.

7. Method according to either of Claims 5 and 6, insofar as they refer back to Claim 4,
**characterized in that**
the step of liquefying the carbon dioxide comprises the substeps of:
cooling the exhaust gas to a temperature that lies below the boiling point of carbon dioxide, preferably using the cold of the liquid oxygen that is vaporized during this step, and
separating the liquid carbon dioxide.

8. Method according to one of Claims 5 to 7,
**characterized in that**
the oxygen gas is admixed with the carbon dioxide gas obtained in the vaporizing step.

9. Method according to one of Claims 1 to 4,
**characterized in that**
the carbon dioxide is extracted from the exhaust gas by pressure swing adsorption or a high-temperature membrane.

10. Method according to one of the preceding claims,
**characterized in that**
the exhaust gas is cooled by air, in particular by air that originates at least partially from the exhaust gas after removal of the liquid carbon dioxide,
the heat required in the step of vaporizing the liquid carbon dioxide preferably being taken at least partially from the air that was used previously for the cooling of the exhaust gas.

11. Method according to one of the preceding claims,
**characterized in that**
comparatively cold air is admixed with the exhaust gas, preferably in the area of the fume hood.

12. Method according to one of the preceding claims,
**characterized in that**
carbon dioxide gas and oxygen gas are conducted into the interior of the converter in separate gas streams, a carbon dioxide gas stream preferably being respectively conducted into the interior of the converter while surrounding an oxygen gas stream.

13. Method according to one of the preceding claims,
**characterized in that**
a number of converters are operated in parallel, the converters being operated in cycles at staggered times.

14. Apparatus for smelting a metal, preferably copper, iron, lead and/or zinc, having a converter, preferably a Peirce-Smith converter or the like, the apparatus being designed and adapted for carrying out the steps of a method according to one of Claims 1 to 13.

## Revendications

1. Procédé de conduite d'un convertisseur, de préférence d'un convertisseur Peirce-Smith ou similaires, dans la production d'un métal, de préférence le cuivre, le fer, le plomb et/ou le zinc, le procédé comportant les étapes qui consistent à :
charger le convertisseur d'un matériau de départ contenant le métal, le métal présent dans le matériau de départ étant lié chimiquement au moins en partie à au moins une substance de liaison, notamment le soufre,
maintenir une température supérieure à la température de fusion du matériau de départ à l'intérieur de l'espace intérieur du convertisseur et
apporter un gaz de traitement contenant de l'oxygène dans l'espace intérieur du convertisseur par des tuyères de soufflage disposées dans la paroi du convertisseur,
le gaz apporté par les tuyères de soufflage présentant du dioxyde de carbone, de préférence du dioxyde de carbone techniquement pur et très froid, ainsi que de l'oxygène gazeux et/ou de l'air, **caractérisé en ce que**
le dioxyde de carbone du gaz de traitement provient au moins en partie des gaz dégagés par le convertisseur.

2. Procédé selon la revendication 1, **caractérisé en outre par** les étapes qui consistent à :
vaporiser du dioxyde de carbone liquide de préférence en utilisant la chaleur que contiennent les gaz dégagés et
utiliser comme composant du gaz de traitement le dioxyde de carbone gazeux ainsi obtenu.

3. Procédé selon l'une des revendications précédentes, **caractérisé en outre par** les étapes qui consistent à :
rassembler les gaz dégagés dans une hotte d'extraction,
refroidir les gaz dégagés,
épurer les gaz dégagés, de préférence par filtrage électrostatique et/ou lavage en conditions humides,
sécher le gaz dégagé, en particulier en séparant l'eau de l'écoulement de gaz dégagé et
liquéfier le dioxyde de soufre gazeux que contiennent les gaz dégagés, de préférence en refroidissant encore les gaz dégagés jusqu'à une température située en dessous du point de rosée du dioxyde de soufre avant de séparer et collecter le dioxyde de soufre liquide provenant de l'écoulement de gaz dégagé.

4. Procédé selon l'une des revendications précédentes, **caractérisé en outre par** les étapes qui consistent à :
vaporiser de l'oxygène liquide, de préférence en utilisant la chaleur que contiennent les gaz dégagés et
utiliser l'oxygène gazeux ainsi obtenu comme composant du gaz de traitement.

5. Procédé selon l'une des revendications précédentes, **caractérisé en outre par** les étapes qui consistent à :
comprimer les gaz dégagés et
liquéfier le dioxyde de carbone gazeux que contiennent les gaz dégagés,
les gaz dégagés étant comprimés au cours de l'étape de compression jusqu'à une pression à laquelle le dioxyde de carbone ne se solidifie pas après avoir été liquéfié.

6. Procédé selon la revendication 5, **caractérisé en outre par** les étapes qui consistent à :
entreposer temporairement dans un récipient tampon le dioxyde de carbone liquide obtenu lors de l'étape de liquéfaction et
gazéifier le dioxyde de carbone liquide entreposé temporairement dans le récipient tampon pour l'apporter aux tuyères de soufflage sous la forme de dioxyde de carbone gazeux,
en apportant à l'accumulateur tampon de préférence du dioxyde de carbone liquide provenant d'une cuve de dioxyde de carbone si une valeur de seuil du niveau de remplissage n'est pas atteinte.

7. Procédé selon l'une des revendications 5 ou 6 dans la mesure où elles sont subordonnées à la revendication 4,
**caractérisé en ce que**
l'étape de liquéfaction du dioxyde de carbone présente les parties suivantes :
refroidissement des gaz dégagés à une température située en dessous du point de rosée du dioxyde de carbone, de préférence en utilisant le froid de l'oxygène liquide vaporisé pendant cette étape et
séparation du dioxyde de carbone liquide.

8. Procédé selon l'une des revendications 5 à 7, **caractérisé en ce que** l'oxygène gazeux est mélangé au dioxyde de carbone gazeux obtenu dans l'étape de vaporisation.

9. Procédé selon l'une des revendications 1 à 4, **caractérisé en ce que** le dioxyde de carbone est prélevé dans les gaz dégagés par adsorption sous alternance de pression ou membrane à haute température.

10. Procédé selon l'une des revendications précédentes, **caractérisé en ce que** les gaz dégagés sont refroidis par de l'air, en particulier par de l'air qui provient au moins en partie des gaz dégagés après prélèvement du dioxyde de carbone gazeux, la chaleur nécessaire au cours de l'étape de vaporisation du dioxyde de carbone liquide étant de préférence prélevée au moins en partie dans l'air qui a été utilisé précédemment pour le refroidissement des gaz dégagés.

11. Procédé selon l'une des revendications précédentes, **caractérisé en ce que** de l'air comparativement froid est mélangé aux gaz dégagés, de préférence au niveau de la hotte d'extraction.

12. Procédé selon l'une des revendications précédentes, **caractérisé en ce que** le dioxyde de carbone gazeux et l'oxygène gazeux sont apportés dans l'espace intérieur du convertisseur en écoulements de gaz séparés, un écoulement de dioxyde de carbone gazeux entourant un écoulement d'oxygène gazeux étant de préférence apporté dans l'espace intérieur du convertisseur.

13. Procédé selon l'une des revendications précédentes, **caractérisé en ce que** plusieurs convertisseurs sont conduits en parallèle, les convertisseurs étant conduits en cycles décalés dans le temps.

14. Dispositif de production d'un métal, de préférence le cuivre, le fer, le plomb et/ou le zinc, présentant un convertisseur, de préférence un convertisseur Peirce-Smith ou similaires, le dispositif étant conçu et adapté pour exécuter les étapes d'un procédé selon l'une des revendications 1 à 13.
